# EUROPEAN PATENT SPECIFICATION

(11) **EP 4 446 776 B1**
(45) Date of publication and mention of the grant of the patent: **31.12.2025**
(21) Application number: 23167730.3
(22) Date of filing: 13.04.2023
(51) Int. Cl.: G01S 13/00, G01S 13/04, G01S 13/32, G01S 7/00, G06F 21/32, G06F 21/33, H04R 1/00, H04W 84/18

(54) **LOCALIZATION SYSTEM AND OPERATING METHOD**
LOKALISIERUNGSSYSTEM UND BETRIEBSVERFAHREN
SYSTÈME DE LOCALISATION ET PROCÉDÉ DE FONCTIONNEMENT

(43) Date of publication of application: 16.10.2024
(73) Proprietor: NXP B.V., 5656 AG Eindhoven (NL)
(72) Inventor: Saracevic, Omar, 5656 AG Eindhoven (NL); Casamassima, Filippo, 5656 AG Eindhoven (NL); Gustin, Matjaz, 5656 AG Eindhoven (NL)
(74) Representative: Krott, Michel

(56) References cited:
- EP-A1- 4 112 370
- EP-A1- 4 116 735
- WO-A1-2022/240609
- WO-A2-2005/045455
- US-A1- 2007 260 340
- US-A1- 2022 171 046

## Description

### TECHNICAL FIELD

The present disclosure relates to a localization system. Furthermore, the present disclosure relates to a corresponding method of operating a localization system, and to a computer program for carrying out said method.

### BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, e.g. for determining the distance between communicating devices. Therefore, UWB technology may be used to advantage in various applications, such as automotive applications. In addition, UWB technology may be used to carry out radar operations, e.g. for detecting objects or persons within a predefined space.

EP 4 112 370 A1 describes a system for facilitating guiding a vehicle to a predefined location, said system configured to be included in a vehicle and comprising: one or more ultra-wideband (UWB) communication units configured to establish UWB communication with a UWB-enabled system installed at said predefined location; a controller configured to control said UWB communication units; wherein the controller is configured to cause the UWB communication units to switch between a communication mode of operation, a ranging mode of operation and a radar mode of operation.

EP 4 116 735 A1 describes a system for facilitating localizing an external device, the system comprising: at least one UWB communication node; a controller operatively coupled to said UWB communication node, wherein the controller is configured to switch the UWB communication node between a ranging mode of operation and a radar mode of operation in dependence on an estimated distance between the UWB communication node and the external device.

### SUMMARY

Aspects of the present disclosure are defined in the appended independent claims. Advantageous embodiments are defined in the appended dependent claims.

### DESCRIPTION OF DRAWINGS

Embodiments will be described in more detail with reference to the appended drawings.
Fig. 1 shows an illustrative embodiment of a localization system.
Fig. 2 shows an illustrative embodiment of a method of operating a localization system.
Fig. 3 shows an illustrative embodiment of a guiding process.
Fig. 4 shows an illustrative embodiment of a guiding system.
Fig. 5 shows another illustrative embodiment of a guiding system.
Fig. 6 shows an illustrative embodiment of an intruder detection process.
Fig. 7 shows an illustrative embodiment of an intruder detection system.

### DESCRIPTION OF EMBODIMENTS

UWB technology may be used in various applications, such as guiding persons to electronic devices and access control in buildings and other spaces. For instance, UWB ranging is touted as being the optimal solution for finding lost items such as headphones, remote controls and even misplaced keys, assuming they are UWB-enabled or equipped with a so-called UWB tag. However, the requirement for using UWB for localization via ranging is that there are two devices that communicate with one another to measure the distance between each other. This, thus, requires the user to have one UWB-equipped device, such as a phone, at hand to perform the search. It cannot be assumed that the user always has such as a device at hand and in the cases of blind or visually impaired users, such devices may not be as helpful if their search tracking system is based on visual cues such as a map. Thus, depending on the circumstances a guiding system based on solely UWB ranging may not always be effective.

Now discussed are a localization system and a corresponding method of operating a localization system, which facilitate increasing the effectiveness of UWB technology in various applications. For instance, the presently disclosed localization system and corresponding operating method facilitate building a guiding system that effectively guides persons to UWB-enabled devices, even if these persons do not carry a UWB-enabled device with them. Furthermore, the presently disclosed localization system and corresponding operating method facilitate building an intruder detections system that effectively detects unauthorized persons in a predefined space.

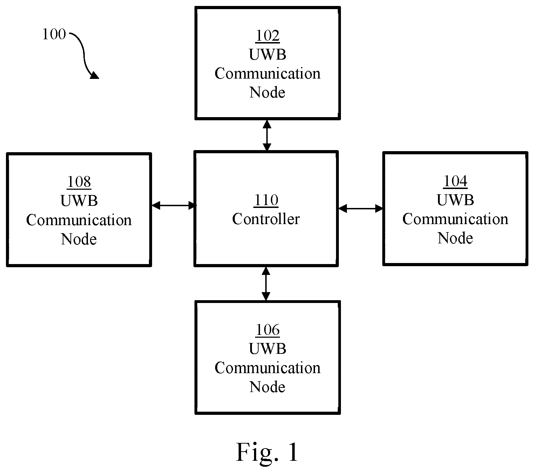

Fig. 1 shows an illustrative embodiment of a localization system 100. The system comprises a plurality of UWB communication nodes 102, 104, 106, 108 and a controller 110 which is operatively coupled to the UWB communication nodes 102, 104, 106, 108. Although a plurality of UWB communication nodes 102, 104, 106, 108 is shown, the system 100 may also comprise only a single UWB communication node. Furthermore, although the controller 110 is shown as a separate unit, it may also be integrated into one of the UWB communication nodes 102, 104, 106, 108. At least one of the UWB communication nodes 102, 104, 106, 108 is configured to perform a first localization operation, wherein said first localization operation is performed in a ranging mode. Furthermore, at least one of the UWB communication nodes 102, 104, 106, 108 is configured to perform a second localization operation, wherein said second localization operation is performed in a radar mode. It is noted that the terms "first" and "second" do not imply a chronological order. Accordingly, the first localization operation may be performed before the second localization operation, the first localization operation may be performed after the second localization operation, or the first localization operation and the second localization operation may be performed simultaneously.

It is noted that the first localization operation and second localization operation may be performed by different ones of the UWB communication nodes 102, 104, 106, 108, or by a single one of said UWB communication nodes 102, 104, 106, 108. In the latter case, the single UWB communication node is a dual-mode UWB communication node configured to perform both the first localization operation and the second localization operation (i.e., to operate both in the ranging mode and in the radar mode). Finally, the controller 110 is configured to perform a predefined function on an output of the first localization operation and an output of the second localization operation. By performing a localization operation in the ranging mode and another localization operation in the radar mode, the effectiveness of using the UWB communication is increased, in the sense that more applications may be enabled, having fewer limitations and a higher reliability. More specifically, the outputs of the localization operations performed in the two different modes represent complementary information that may be used to extend the capabilities of guiding systems and intruder detection systems. It is noted that the term "output" may be interpreted broadly. For example, the output of a localization operation may be the result of a processing of raw data measured as part of the localization. In the ranging mode, these raw data may include measured distances, and in the radar mode, they may include measured radar pulses. In that case, the raw data of the first localization operation and the raw data of the second localization operation may be processed separately to obtain different outputs, which may then be used as inputs by the predefined function. However, the term "output" as used herein may also refer to the raw data themselves. In that, the predefined function may process the raw data of the first localization operation and the raw data of the second localization operation together.

In a first embodiment, the output of the first localization operation is indicative of a position of an external UWB communication device within a predefined space, the output of the second localization operation is indicative of a position of a person within said predefined space, and the predefined function comprises calculating a distance between said person and said external UWB communication device. In this way, a distance between a person and a UWB-enabled device may be determined in an efficient way, even if the person does not carry a device which can communicate with the controller or with the UWB-enabled device. This, in turn, may extend the capabilities of a guiding system. It is noted that the term "external" refers to the characteristic that the UWB communication device does not form part of the localization system. Rather, the UWB communication device may be a device that is being localized or tracked by the localization system. Furthermore, it is noted that the UWB communication device may be implemented in different ways. For example, the UWB communication device may be implemented as a so-called UWB tag, or as a consumer device having embedded UWB communication capabilities. In one or more embodiments, the controller is further configured to generate data for guiding the person to the position of the external UWB communication device based on said distance. In this way, the person may be guided effectively to the UWB communication device. In one or more embodiments, the predefined function further comprises determining an orientation of the person towards the external UWB communication device, and the controller is further configured to generate data for guiding the person to the position of the external UWB communication device based on said distance and orientation. In this way, the person may be guided more effectively to the UWB communication device.

In preferred implementations of the first embodiment, the system further comprises at least one audio device for receiving an audio signal, and the controller is configured to perform the predefined function on the output of the first localization operation, the output of the second localization operation and data derived from said audio signal. By taking into account data derived from the audio signal, a guiding system may be further improved, in the sense that the person may easily instruct the localization system to find a specific UWB-enabled device among a plurality of devices. For example, in a practical implementation the data derived from the audio signal comprise a spoken command that includes information for identifying an external UWB communication device. Furthermore, the guiding system may be further improved in the sense that, in case multiple persons are within the communication range of the localization system, the specific person who should be guided may be identified more easily. For example, in a practical implementation the controller is further configured to accept, reject, filter, fine-tune or post-process the output of the second localization operation based on a direction from which the audio signal is received, the intensity of the audio signal and/or other properties of the audio signal.

In a second embodiment, the output of the first localization operation is indicative of positions of one or more external UWB communication devices within a predefined space, the output of the second localization operation is indicative of positions of one or more persons within said predefined space, and the predefined function comprises determining whether the positions of the external UWB communication devices match the positions of the persons. In this way, it may be easily be verified whether the UWB communication devices are carried by the persons. This, in turn, may extend the capabilities of an intruder detection system. The underlying assumption may be that the persons should carry the UWB communication devices in order to be authorized for a predefined space. The skilled person will appreciate that an exact match between the positions is not needed. Rather, the positions should match within a predefined error margin, which may depend on the application. Optionally, the output of the second localization operation may also be indicative of the orientation of the person. This may be useful in certain scenarios, for example to identify an intruder with a higher accuracy in case multiple persons in a group do not carry an authorized tag, or to predict the direction in which an intruder is moving and inform security personnel about this direction. In one or more embodiments, the controller is further configured to generate a first alert if at least one of the positions of the persons does not match any of the positions of the external UWB communication devices. In this way, security personnel may easily be notified about a potential intrusion and the location of the intruder.

In preferred implementations of the second embodiment, the controller is further configured to authenticate the external UWB communication device. In this way, it may be verified more easily whether the person carries the correct UWB-enabled device, i.e. the device that authorizes the person to be present in the predefined space. In one or more embodiments, the controller is further configured to generate a second alert if the external UWB communication device is not authentic or not authorized within the predefined space. In this way, security personnel may easily be notified about a potential intrusion and the location of the intruder. In a practical implementation, authenticating the external UWB communication device comprises an authentication via data transfer between the controller and the external UWB communication device through a UWB communication channel or another communication channel established between one of the UWB communication nodes and said external UWB communication device. The skilled person will appreciate that the authentication of the external UWB communication device may be implemented in different ways. For example, authentication credentials may be exchanged between the controller and the external UWB communication device, either through a UWB communication channel established between a specific UWB communication node and the external UWB communication device, or through another communication channel (e.g., Wi-Fi or Bluetooth) established between the specific UWB communication node and the external UWB communication device. It is noted that the use of a UWB communication channel reduces costs, compared to the use of another communication channel. Furthermore, it is noted that an alternative way of authenticating the external UWB communication device may involve the use of zero-knowledge proofs.

UWB may have multiple functionalities which include: ranging functionality for precise distance-distance differences and angle measurements between two or more devices of interest, radar functionality to sense the type of elements in the environment, and data communication functionality for secure and low-latency data transfer between two or more devices. It is noted that the presently disclosed localization system may utilize all of these UWB-supported functions.

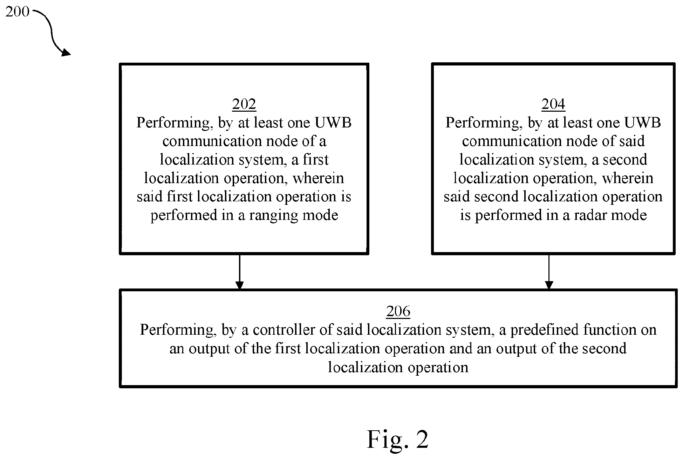

Fig. 2 shows an illustrative embodiment of a method 200 of operating a localization system. The method 200 comprises the following steps. At 202, at least one UWB communication node of a localization system performs a first localization operation, wherein said first localization operation is performed in a ranging mode. Furthermore, at 204, at least one UWB communication node of said localization system performs a second localization operation, wherein said second localization operation is performed in a radar mode. Furthermore, at 206, a controller of said localization system performs a predefined function on an output of the first localization operation and an output of the second localization operation. As mentioned above, by performing a localization operation in the ranging mode and another localization operation in the radar mode, the effectiveness of using the UWB communication is increased, in the sense that more applications may be enabled, having fewer limitations and a higher reliability. Furthermore, as mentioned above, the terms "first" and "second" do not imply a chronological order. Accordingly, the first localization operation may be performed before the second localization operation, the first localization operation may be performed after the second localization operation, or the first localization operation and the second localization operation may be performed simultaneously.

In accordance with the present disclosure, a hybrid UWB ranging and radar scheme are envisaged, having an optional additional sensor fusion function and making use of other optional data sources. In particular, fixed UWB devices may be used, which may be incorporated into indoor spaces, such as in lighting systems, as well as outdoor living spaces, such as at entry points for the metro or a stadium or a parking lot. These devices may have the capability to perform simultaneous or interleaved ranging and radar measurements, whereby the former can be used for localizing UWB-tagged objects such as phones, wallets, headsets or keys, and the latter can be used for tracking movement, orientation and breathing of targets in the field of view, which enables tracking people. Using UWB radar and potential other sensors, such as acoustic sensors, the trajectory of a person's movement as well as the person's orientation can be tracked, monitored and used to assist the person in a certain setting. Combining all of this information with, for example, geometric formulas, the correct location of UWB-tagged and untagged objects (detected by UWB radar or sensor fusion) may be determined. Combining UWB ranging with UWB radar may enable a multitude of usecases, which varies from guiding non-tagged people inside closed spaces to detecting potential unauthorized intruders amongst a group of people, using quick and reliable data communication for secure authentication of people and items inside a certain place.

UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, and in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). Devices equipped with at least two antennas may additionally measure the angle-of-arrival (AoA) of any received UWB frame. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. Generally speaking, the term "ranging mode" covers all types localization operations based on UWB message exchanges with an external UWB communication device.

In a radar mode of operation, frames are transmitted by at least one device and those frames are received by the same device and/or by one or more other devices. Then, the CIRs are estimated on the device or devices receiving the frames, and the range and/or velocity and/or AoA of the objects and beings in the environment reflecting the frame are calculated based on the estimated CIRs. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are nonlimiting examples of how the different modes of operation can be implemented. In other words, the modes may be implemented differently, depending on the requirements imposed by the application, for example.

Specifically, UWB radar has the capability of receiving echoes that are due to reflections in the environment after a narrow impulse has been transmitted. Depending on the radar cross-section, material properties and polarization of each item in a scene, a channel impulse response (CIR) is returned which contains the magnitude and phase of the echo returned from different surfaces in the environment. By collecting multiple CIRs over time a radar map may be formed, which contains time-dependent information about changes in the scene and yields information not only in the fast time (distance) but also in the slow-time (temporal) domain. As the IoT presence of UWB radar becomes more prominent it will move from vehicles and mobile phones to indoor as well as outdoor settings, where it can be embedded into lighting systems and different smart home devices. UWB ranging on the other hand uses Time of Flight (ToF) information and schemes such as one-way ranging, SS-TWR or DS-TWR to accurately and precisely determine the distance between two or more devices of interest. Other complementary ways of localizing objects via communication between two UWB-equipped devices may include methods based on the TDoA and the AoA. Data communication over UWB allows for information transfer between two or more devices on top of other UWB capabilities such as ranging and radar.

Using this information about the possibilities of UWB ranging and radar, several applications for a system utilizing both radar and ranging simultaneously may be envisaged. For example, a localization system may contain one or more fixed UWB communication nodes, which may be mounted in indoor settings via the lighting system or attached to entrances for different forms of public transportation, and outdoor or semi-outdoor at barrier-less entry points for offices, stadiums or concert venues. These fixed UWB communication nodes may then serve many purposes, for example in guiding systems for indoor settings and in intruder detection systems.

Guiding systems may make it easier for people to search for a certain object, by simply asking the smart home system or virtual assistant a question such as "Hello, where is my TV remote?". The smart home system may then respond with the precise spatial information, "Your TV remote is located two meters to your left.". The guiding system may involve using the fixed UWB communication nodes to perform radar measurements to identify people in a room and at the same time determine the location of UWB-tagged objects via ranging. The radar may also be used to monitor and track the moving objects and, therefore, to analyze the trajectory of a specific person. This would also allow for determining the orientation of a specific person in a room. Using this information, it is possible to compute the relative distance and angles between the person posing the question and the object in question. Other items that may be located via ranging and be UWB-tagged include phones, cars in parking lots, chargers, and pets.

The tracking and guiding system may take the input of additional sensors into account, for example using a sensor-fusion oriented approach. For instance, a smart home system may try to localize the source of the voice of a user posing a question or command. Such a localization may be performed by cross-checking the position and orientation of the people in the environment (information obtained from UWB radar) with the beamforming of an array of microphones and approximate audio-based location estimation.

A localization system of the kind set forth may be further expanded to leverage other UWB-connected microphones in the environment, such as those already existing on UWB-enabled smartphones, or dedicated microphones installed on each UWB communication node. In both cases, UWB offers the possibility to handle the data transfer of the voice signal from the microphone to a central processing node, such as a virtual assistant device. In the second case of UWB communication nodes with microphones, the UWB radio technology may be used once again to reduce costs, because it may also be used for the data transfer. In other words, in that case the communication nodes do not need to have an additional dedicated connectivity device, for example for supporting a data transfer via Wi-Fi, Bluetooth, or Ethernet.

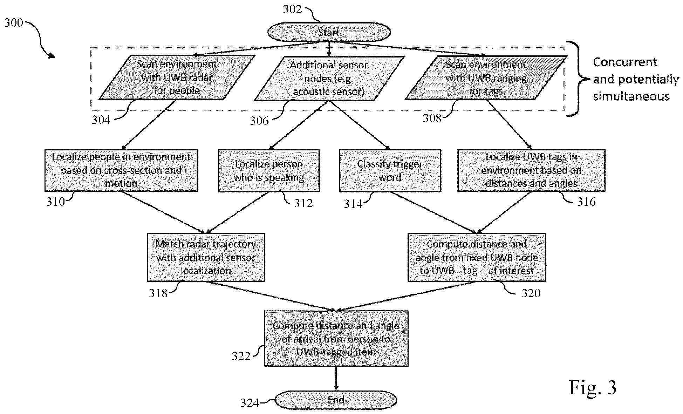

Fig. 3 shows an illustrative embodiment of a guiding process 300. The process 300 includes concurrently scanning 304 the environment for people using UWB radar, collecting 306 data from one or more additional sensor nodes (such as an acoustic sensor), and scanning 308 the environment for UWB tags using UWB ranging. The UWB radar data enables localizing 310 people in environment based on cross-section and motion. The output of this localization 310 may be combined with the output of a localization 312 of a person who is speaking, using collected audio data. The same audio data may be used to identify a trigger word based on a classification 314 function. The trigger word may be used to identify one of a plurality of UWB tags to which the speaking person should be guided. Once the UWB tags in the environment have been localized 316 based on distances and angles, the distance and angle from the fixed UWB communication node to the UWB tag of interest may be computed 320. Matching 318 the radar trajectory with additional sensor localization provides output indicative of the position of the speaking person. Then, distance and angle of arrival from person to the UWB tag of interest may be computed 322.

A guiding system of the kind set forth may also be beneficial and pertinent in the case that a person's phone loses battery and ranging cannot be performed between the user's phone and the lost item. Furthermore, such a guiding system may be used for guiding visually impaired and blind people in indoor settings. UWB radar may in the latter case be able to track the person moving and provide acoustic guidance for avoiding physical obstacles present in the scene, as well as information about items that the person might wish to reach.

The UWB radar may be able to localize one or more people in the scene by potentially using either range-Doppler maps for analysis, or slow-time data that is fed into an appropriate machine learning model. Classic signal processing algorithms may be used for removing static clutter, selecting the bin and distance of interest and signal denoising. Using a trajectory-based approach it may be determined in which direction a person or object is facing. Based on the localization and orientation of the person together with the UWB ranging localization, simple geometric formulas may be used for determining the relative distance and angle information between the designated item of interest and the person seeking assistance. If multiple people are in a scene, sound localization algorithms may be used to determine the exact position and trajectory of the person seeking guidance.

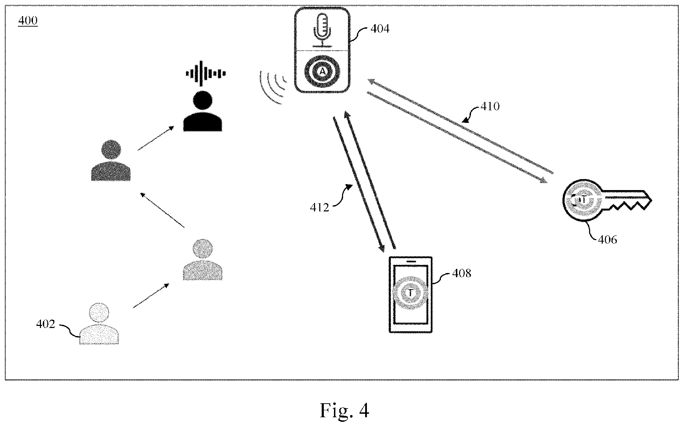

Fig. 4 shows an illustrative embodiment of a guiding system 400. The guiding system 400 includes a localization system of the kind set forth. In this embodiment, the localization system comprises only a single UWB communication node 404. Furthermore, in this embodiment, the controller (not shown) is embedded in the UWB communication node 404. A person 402 moving in a room is looking for an UWB-tagged key 406. Furthermore, UWB ranging is used to determine the location of different UWB-tagged devices, such as the key 406 and a phone 408, and UWB radar is used to determine the current location as well as facing direction of the person 402 making the request. Based on the keyword "key" uttered by the person 402, the correct ranging session is determined to be the ranging session 410 with the key 406 and not the ranging session 412 with the phone 408.

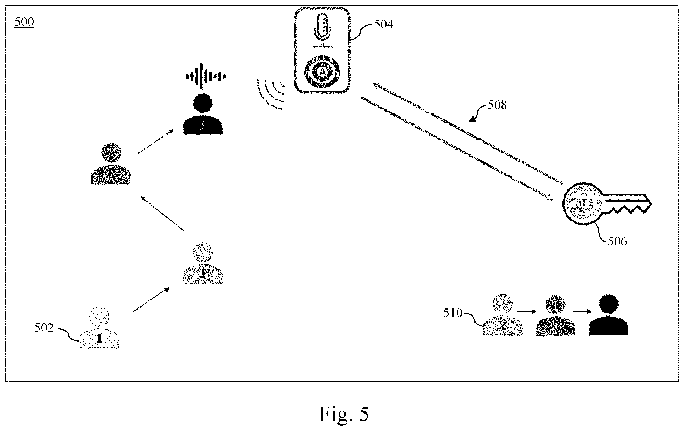

Fig. 5 shows another illustrative embodiment of a guiding system 500. The guiding system 500 includes a localization system of the kind set forth. In this embodiment, the localization system comprises only a single UWB communication node 504. Furthermore, in this embodiment, the controller (not shown) is embedded in the UWB communication node 504. In this example, one person 502 moving through a room is trying to localize a key 506, while another person 510 is moving through the same room. The person 502 who is trying to localize the key 506 is tracked by the UWB communication node 504 via radar and microphone. Furthermore, the position of the object of interest which is the key 406, is tracked via at least one UWB ranging session 508.

In the examples shown in Figs. 4 and 5, each specific item that is tagged may have a unique trigger word and identifier which may be matched for UWB ranging purposes and computing the correct position of the item of interest. Although these example show a two-dimensional localization and tracking of objects, it may be possible to extend this to the three-dimensional domain. In particular, combining the information of ToF and/or TDoA and/or AoA from the UWB signal, UWB radar, and the strength and AoA of the acoustic waves may provide more information to increase the accuracy of the localization result in three-dimensional space of different objects and people in the vicinity.

Other guiding systems may involve using only UWB ranging to track an item, but both UWB ranging and UWB radar may be used together for enhanced guidance, i.e. to understand a person's orientation with higher accuracy based on the CIR, compared to the accuracy obtained via ranging only. Furthermore, UWB ranging and UWB radar may be used simultaneously to track people's position and orientation, in order to determine if a tracking tag has been removed or has stopped functioning. This could be useful in retirement homes or clinics to find lost patients or to determine when a tracker was removed, since it may result in diverging acquired ranging and radar data.

A second potential application of a localization system based on UWB ranging and radar, would be to determine if an intruder has entered a certain space. This may be determined by determining the number of UWB tags present in a certain space using UWB ranging and by comparing this number to the number of people detected by a scan of the same space using UWB radar. Furthermore, the UWB tags in a certain space, which have been detected using UWB ranging, may be authenticated via data transfer to determine who has the correct credentials to enter a certain space. Places of use for such a system are, for example, a person's home, offices, public transportation, barrier free entry points (e.g., metro and stadiums) and various concert venues.

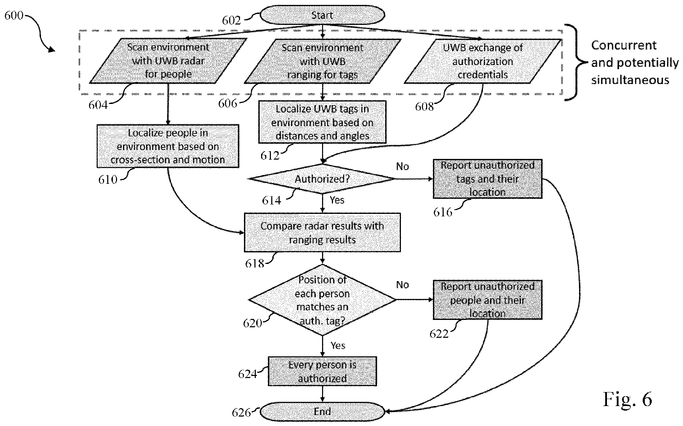

Fig. 6 shows an illustrative embodiment of an intruder detection process 600. The process 600 includes concurrently scanning 604 the environment for people using UWB radar, scanning 606 the environment for UWB tags using UWB ranging, and exchanging 608 authorization credentials between the controller and the detected UWB tags. Using the results of the radar-based scanning 604, people may be localized 610 in the environment based on cross-section and motion. Furthermore, using the results of the ranging-based scanning 606, UWB tags may be localized 612 in the environment based on distances and angles. Based on the exchanged authorization credentials 608, the controller may verify 614 whether the localized UWB tags are authorized or not. If the UWB tags are authorized tags, the radar results may be compared 618 with the ranging results. Otherwise, the unauthorized UWB tags and their location may be reported 616, for example to security personnel. Furthermore, the controller may verify 620 whether the position of each person matches an authorized UWB tag. If this is the case, then the controller may conclude 624 that every person is authorized. Otherwise, the unauthorized people and their location may be reported 622, for example to security personnel. The skilled person will appreciate that an exact match is not needed. Rather, the term "match" implies that a predefined error margin may be taken into account. This error margin may depend on the application.

The number of localized UWB tags and the number of moving objects based on their respective cross-sections detected by UWB radar would be the same in the ideal case. If the number of localized UWB tags is greater than the number of breathing objects in the scene, then the difference may be due to one person having multiple UWB-equipped devices, stolen devices or devices forgotten in the current space being analyzed. If more people are detected with UWB radar than authenticated and localized devices, then this would indicate that a person has entered who does not have the appropriate credentials or authorization.

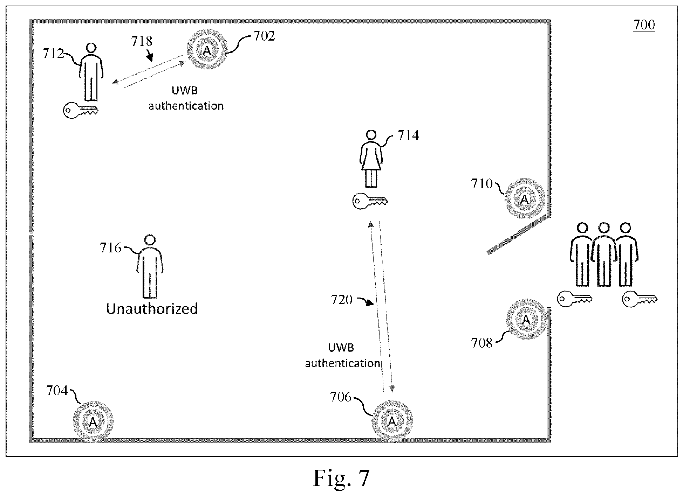

Fig. 7 shows an illustrative embodiment of an intruder detection system 700. The intruder detection system 700 includes a localization system of the kind set forth. In this embodiment, the localization system comprises a plurality of UWB communication nodes 702, 704, 706, 708, 710. Furthermore, in this embodiment, the controller (not shown) may be embedded in one of the UWB communication nodes 702, 704, 706, 708, 710. The UWB communication nodes 702, 704, 706, 708, 710 sense the environment and detect the presence and approximate location of individuals using UWB radar. An authentication message is then exchanged between one or more of the UWB communication nodes 702, 704, 706, 708, 710 and the UWB tags (which are represented as keys). Persons with no or improper authorization, such as person 716, are reported and tracked.

By matching the UWB ranging localization results with the trajectory detected by UWB radar, the exact position of the intruder may be determined and security personnel may be notified. In the case of public transportation, further optimizations may be implemented at entrance and exit choke points to determine whether a person whose trajectory is being tracked by UWB radar has the correct authorization to travel. Compared to a simple access control system (e.g., a gate) where only authorized people are allowed to pass, this system may continuously verify that currently present people in a certain environment are all still authorized. This may detect the following types of intrusions: those that bypassed the access control system (e.g., jumped over the gate, found a different unchecked entrance), those that tailgated someone authorized through the gate, those that entered by reusing the same access token (e.g., passing an entrance card from person to person), those that abused an access control system security vulnerability, and those that had a valid access token upon entry, but it expired before they exited.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described.

In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware.

### LIST OF REFERENCE SIGNS

- 100: localization system
- 102: UWB communication node
- 104: UWB communication node
- 106: UWB communication node
- 108: UWB communication node
- 110: controller
- 200: method of operating a localization system
- 202: performing, by at least one UWB communication node of a localization system, a first localization operation, wherein said first localization operation is performed in a ranging mode
- 204: performing, by at least one UWB communication node of said localization system, a second localization operation, wherein said second localization operation is performed in a radar mode
- 206: performing, by a controller of said localization system, a predefined function on an output of the first localization operation and an output of the second localization operation
- 300: guiding process
- 302: start
- 304: scan environment with UWB radar for people
- 306: additional sensor nodes (e.g. acoustic sensor)
- 308: scan environment with UWB ranging for tags
- 310: localize people in environment based on cross-section and motion
- 312: localize person who is speaking
- 314: classify trigger word
- 316: localize UWB tags in environment based on distances and angles
- 318: match radar trajectory with additional sensor localization
- 320: compute distance and angle from fixed UWB node to UWB tag of interest
- 322: compute distance and angle of arrival from person to UWB-tagged item
- 324: end
- 400: guiding system
- 402: person
- 404: UWB communication node (fixed)
- 406: external UWB communication device (key)
- 408: external UWB communication device (phone)
- 410: ranging session
- 412: ranging session
- 500: guiding system
- 502: first person
- 504: UWB communication node (fixed)
- 506: external UWB communication device (key)
- 508: ranging session
- 510: second person
- 600: intruder detection process
- 602: start
- 604: scan environment with UWB radar for people
- 606: scan environment with UWB ranging for tags
- 608: UWB exchange of authorization credentials
- 610: localize people in environment based on cross-section and motion
- 612: localize UWB tags in environment based on distances and angles
- 614: authorized?
- 616: report unauthorized tags and their location
- 618: compare radar results with ranging results
- 620: position of each person matches an authorized tag?
- 622: report unauthorized people and their location
- 624: every person is authorized
- 626: end
- 700: intruder detection system
- 702: UWB communication node (fixed)
- 704: UWB communication node (fixed)
- 706: UWB communication node (fixed)
- 708: UWB communication node (fixed)
- 710: UWB communication node (fixed)
- 712: first person
- 714: second person
- 716: third person
- 718: UWB authentication session
- 720: UWB authentication session

## Claims

1. A localization system (100), comprising:
one or more ultra-wideband, UWB, communication nodes (102, 104, 106, 108);
a controller (110) operatively coupled to the UWB communication nodes (102, 104, 106, 108);
wherein at least one of the UWB communication nodes (102, 104, 106, 108) is configured to perform a first localization operation, wherein said first localization operation is performed in a ranging mode;
wherein at least one of the UWB communication nodes (102, 104, 106, 108) is configured to perform a second localization operation, wherein said second localization operation is performed in a radar mode;
wherein the controller (110) is configured to perform a predefined function on an output of the first localization operation and an output of the second localization operation;
**characterized in that** the output of the first localization operation is indicative of a position of an external UWB communication device within a predefined space, wherein the output of the second localization operation is indicative of a position of a person within said predefined space, wherein the predefined function comprises calculating a distance between said person and said external UWB communication device, and wherein the controller (110) is further configured to generate data for guiding the person to the position of the external UWB communication device based on said distance.

2. The system (100) of claim 1, wherein the predefined function further comprises determining an orientation of the person towards the external UWB communication device, and wherein the controller (110) is further configured to generate data for guiding the person to the position of the external UWB communication device based on said distance and orientation.

3. The system (100) of any preceding claim, further comprising at least one audio device for receiving an audio signal, wherein the controller (110) is configured to perform the predefined function on the output of the first localization operation, the output of the second localization operation and data derived from said audio signal.

4. The system (100) of claim 3, wherein said data derived from the audio signal comprise a spoken command that includes information for identifying an external UWB communication device.

5. The system (100) of claim 3 or 4, wherein the controller (110) is further configured to accept, reject, filter, fine-tune or post-process the output of the second localization operation based on a direction from which the audio signal is received, the intensity of the audio signal and/or other properties of the audio signal.

6. A localization system (100), comprising:
one or more ultra-wideband, UWB, communication nodes (102, 104, 106, 108);
a controller (110) operatively coupled to the UWB communication nodes (102, 104, 106, 108);
wherein at least one of the UWB communication nodes (102, 104, 106, 108) is configured to perform a first localization operation, wherein said first localization operation is performed in a ranging mode;
wherein at least one of the UWB communication nodes (102, 104, 106, 108) is configured to perform a second localization operation, wherein said second localization operation is performed in a radar mode;
wherein the controller (110) is configured to perform a predefined function on an output of the first localization operation and an output of the second localization operation;
**characterized in that** the output of the first localization operation is indicative of positions of one or more external UWB communication devices within a predefined space, wherein the output of the second localization operation is indicative of positions of one or more persons within said predefined space, and wherein the predefined function comprises determining whether the positions of the external UWB communication devices match the positions of the persons.

7. The system (100) of claim 6, wherein the controller (110) is further configured to generate a first alert if at least one of the positions of the persons does not match any of the positions of the external UWB communication devices.

8. The system (100) of claim 6 or 7, wherein the controller (110) is further configured to authenticate the external UWB communication device.

9. The system (100) of claim 8, wherein the controller (110) is further configured to generate a second alert if the external UWB communication device is not authentic or not authorized within the predefined space.

10. The system (100) of claims 8 or 9, wherein authenticating the external UWB communication device comprises an authentication via data transfer between the controller and the external UWB communication device through a UWB communication channel or another communication channel established between one of the UWB communication nodes (102, 104, 106, 108) and said external UWB communication device.

11. The system (100) of any preceding claim, wherein at least one of the UWB communication nodes (102, 104, 106, 108) is a dual-mode UWB communication node configured to perform both the first localization operation and the second localization operation.

12. A method (200) of operating a localization system, the system comprising one or more ultra-wideband, UWB, communication nodes and a controller, and the method comprising:
performing (202), by at least one of the UWB communication nodes, a first localization operation, wherein said first localization operation is performed in a ranging mode;
performing (204), by at least one of the UWB communication nodes, a second localization operation, wherein said second localization operation is performed in a radar mode;
performing (206), by the controller, a predefined function on an output of the first localization operation and an output of the second localization operation;
**characterized in that** the output of the first localization operation is indicative of a position of an external UWB communication device within a predefined space, wherein the output of the second localization operation is indicative of a position of a person within said predefined space, wherein the predefined function comprises calculating a distance between said person and said external UWB communication device, and wherein the controller generates data for guiding the person to the position of the external UWB communication device based on said distance.

13. A method (200) of operating a localization system, the system comprising one or more ultra-wideband, UWB, communication nodes and a controller, and the method comprising:
performing (202), by at least one of the UWB communication nodes, a first localization operation, wherein said first localization operation is performed in a ranging mode;
performing (204), by at least one of the UWB communication nodes, a second localization operation, wherein said second localization operation is performed in a radar mode;
performing (206), by the controller, a predefined function on an output of the first localization operation and an output of the second localization operation;
**characterized in that** the output of the first localization operation is indicative of positions of one or more external UWB communication devices within a predefined space, wherein the output of the second localization operation is indicative of positions of one or more persons within said predefined space, and wherein the predefined function comprises determining whether the positions of the external UWB communication devices match the positions of the persons.

14. A computer program comprising executable instructions which, when executed by the localization system (100) of any one of claims 1 to 11, cause said localization system (100) to carry out the method (200) of claim 12 or 13.

## Patentansprüche

1. Lokalisierungssystem (100), das Folgendes umfasst:
einen oder mehrere Ultrabreitband-, UWB-, Kommunikationsknoten (102, 104, 106, 108);
eine Steuerung (110), die operativ mit den UWB-Kommunikationsknoten (102, 104, 106, 108) gekoppelt ist;
wobei mindestens einer der UWB-Kommunikationsknoten (102, 104, 106, 108) dazu ausgelegt ist, eine erste Lokalisierungsoperation durchzuführen, wobei die erste Lokalisierungsoperation in einem Entfernungsmessungsmodus durchgeführt wird;
wobei mindestens einer der UWB-Kommunikationsknoten (102, 104, 106, 108) dazu ausgelegt ist, eine zweite Lokalisierungsoperation durchzuführen, wobei die zweite Lokalisierungsoperation in einem Radarmodus durchgeführt wird;
wobei die Steuerung (110) dazu ausgelegt ist, eine vordefinierte Funktion an einer Ausgabe der ersten Lokalisierungsoperation und einer Ausgabe der zweiten Lokalisierungsoperation durchzuführen;
**dadurch gekennzeichnet, dass** die Ausgabe der ersten Lokalisierungsoperation eine Position einer externen UWB-Kommunikationsvorrichtung innerhalb eines vordefinierten Raums angibt, wobei die Ausgabe der zweiten Lokalisierungsoperation eine Position einer Person innerhalb des vordefinierten Raums angibt, wobei die vordefinierte Funktion das Berechnen eines Abstands zwischen der Person und der externen UWB-Kommunikationsvorrichtung umfasst, und wobei die Steuerung (110) ferner dazu ausgelegt ist, Daten zum Führen der Person zu der Position der externen UWB-Kommunikationsvorrichtung basierend auf der Entfernung zu erzeugen.

2. System (100) nach Anspruch 1, wobei die vordefinierte Funktion ferner das Bestimmen einer Orientierung der Person zu der externen UWB-Kommunikationsvorrichtung umfasst und wobei die Steuerung (110) ferner dazu ausgelegt ist, Daten zum Führen der Person zu der Position der externen UWB-Kommunikationsvorrichtung basierend auf der Entfernung und Orientierung zu erzeugen.

3. System (100) nach einem der vorhergehenden Ansprüche, das ferner mindestens eine Audiovorrichtung zum Empfangen eines Audiosignals umfasst, wobei die Steuerung (110) dazu ausgelegt ist, die vordefinierte Funktion an der Ausgabe der ersten Lokalisierungsoperation, der Ausgabe der zweiten Lokalisierungsoperation und von dem Audiosignal abgeleiteten Daten durchzuführen.

4. System (100) nach Anspruch 3, wobei die von dem Audiosignal abgeleiteten Daten einen gesprochenen Befehl umfassen, der Informationen zum Identifizieren einer externen UWB-Kommunikationsvorrichtung beinhaltet.

5. System (100) nach Anspruch 3 oder 4, wobei die Steuerung (110) ferner dazu ausgelegt ist, die Ausgabe der zweiten Lokalisierungsoperation basierend auf einer Richtung, aus der das Audiosignal empfangen wird, der Intensität des Audiosignals und/oder anderen Eigenschaften des Audiosignals zu akzeptieren, abzulehnen, zu filtern, feinabzustimmen oder nachzuverarbeiten.

6. Lokalisierungssystem (100), das Folgendes umfasst:
einen oder mehrere Ultrabreitband-, UWB-, Kommunikationsknoten (102, 104, 106, 108);
eine Steuerung (110), die operativ mit den UWB-Kommunikationsknoten (102, 104, 106, 108) gekoppelt ist;
wobei mindestens einer der UWB-Kommunikationsknoten (102, 104, 106, 108) dazu ausgelegt ist, eine erste Lokalisierungsoperation durchzuführen, wobei die erste Lokalisierungsoperation in einem Entfernungsmessungsmodus durchgeführt wird;
wobei mindestens einer der UWB-Kommunikationsknoten (102, 104, 106, 108) dazu ausgelegt ist, eine zweite Lokalisierungsoperation durchzuführen, wobei die zweite Lokalisierungsoperation in einem Radarmodus durchgeführt wird;
wobei die Steuerung (110) dazu ausgelegt ist, eine vordefinierte Funktion an einer Ausgabe der ersten Lokalisierungsoperation und einer Ausgabe der zweiten Lokalisierungsoperation durchzuführen;
**dadurch gekennzeichnet, dass** die Ausgabe der ersten Lokalisierungsoperation Positionen einer oder mehrerer externer UWB-Kommunikationsvorrichtungen innerhalb eines vordefinierten Raums angibt, wobei die Ausgabe der zweiten Lokalisierungsoperation Positionen einer oder mehrerer Personen innerhalb des vordefinierten Raums angibt und wobei die vordefinierte Funktion das Bestimmen umfasst, ob die Positionen der externen UWB-Kommunikationsvorrichtungen mit den Positionen der Personen übereinstimmen.

7. System (100) nach Anspruch 6, wobei die Steuerung (110) ferner dazu ausgelegt ist, eine erste Warnung zu erzeugen, wenn mindestens eine der Positionen der Personen mit keiner der Positionen der externen UWB-Kommunikationsvorrichtungen übereinstimmt.

8. System (100) nach Anspruch 6 oder 7, wobei die Steuerung (110) ferner dazu ausgelegt ist, die externe UWB-Kommunikationsvorrichtung zu authentifizieren.

9. System (100) nach Anspruch 8, wobei die Steuerung (110) ferner dazu ausgelegt ist, eine zweite Warnung zu erzeugen, falls die externe UWB-Kommunikationsvorrichtung innerhalb des vordefinierten Raums nicht authentisch oder nicht autorisiert ist.

10. System (100) nach Anspruch 8 oder 9, wobei das Authentifizieren der externen UWB-Kommunikationsvorrichtung eine Authentifizierung über Datenübertragung zwischen der Steuerung und der externen UWB-Kommunikationsvorrichtung über einen UWB-Kommunikationskanal oder einen anderen Kommunikationskanal umfasst, der zwischen einem der UWB-Kommunikationsknoten (102, 104, 106, 108) und der externen UWB-Kommunikationsvorrichtung eingerichtet ist.

11. System (100) nach einem der vorhergehenden Ansprüche, wobei mindestens einer der UWB-Kommunikationsknoten (102, 104, 106, 108) ein Dual-Mode-UWB-Kommunikationsknoten ist, der dazu ausgelegt ist, sowohl die erste Lokalisierungsoperation als auch die zweite Lokalisierungsoperation durchzuführen.

12. Verfahren (200) zum Betreiben eines Lokalisierungssystems, wobei das System einen oder mehrere Ultrabreitband-, UWB-, Kommunikationsknoten und eine Steuerung umfasst und das Verfahren Folgendes umfasst:
Durchführen (202), durch mindestens einen der UWB-Kommunikationsknoten, einer ersten Lokalisierungsoperation, wobei die erste Lokalisierungsoperation in einem Entfernungsmessungsmodus durchgeführt wird;
Durchführen (204), durch mindestens einen der UWB-Kommunikationsknoten, einer zweiten Lokalisierungsoperation, wobei die zweite Lokalisierungsoperation in einem Radarmodus durchgeführt wird;
Durchführen (206), durch die Steuerung, einer vordefinierten Funktion an einer Ausgabe der ersten Lokalisierungsoperation und einer Ausgabe der zweiten Lokalisierungsoperation;
**dadurch gekennzeichnet, dass** die Ausgabe der ersten Lokalisierungsoperation eine Position einer externen UWB-Kommunikationsvorrichtung innerhalb eines vordefinierten Raums angibt, wobei die Ausgabe der zweiten Lokalisierungsoperation eine Position einer Person innerhalb des vordefinierten Raums angibt, wobei die vordefinierte Funktion das Berechnen eines Abstands zwischen der Person und der externen UWB-Kommunikationsvorrichtung umfasst, und wobei die Steuerung Daten zum Führen der Person zu der Position der externen UWB-Kommunikationsvorrichtung basierend auf der Entfernung erzeugt.

13. Verfahren (200) zum Betreiben eines Lokalisierungssystems, wobei das System einen oder mehrere Ultrabreitband-, UWB-, Kommunikationsknoten und eine Steuerung umfasst und das Verfahren Folgendes umfasst:
Durchführen (202), durch mindestens einen der UWB-Kommunikationsknoten, einer ersten Lokalisierungsoperation, wobei die erste Lokalisierungsoperation in einem Entfernungsmessungsmodus durchgeführt wird;
Durchführen (204), durch mindestens einen der UWB-Kommunikationsknoten, einer zweiten Lokalisierungsoperation, wobei die zweite Lokalisierungsoperation in einem Radarmodus durchgeführt wird;
Durchführen (206), durch die Steuerung, einer vordefinierten Funktion an einer Ausgabe der ersten Lokalisierungsoperation und einer Ausgabe der zweiten Lokalisierungsoperation;
**dadurch gekennzeichnet, dass** die Ausgabe der ersten Lokalisierungsoperation Positionen einer oder mehrerer externer UWB-Kommunikationsvorrichtungen innerhalb eines vordefinierten Raums angibt, wobei die Ausgabe der zweiten Lokalisierungsoperation Positionen einer oder mehrerer Personen innerhalb des vordefinierten Raums angibt und wobei die vordefinierte Funktion das Bestimmen umfasst, ob die Positionen der externen UWB-Kommunikationsvorrichtungen mit den Positionen der Personen übereinstimmen.

14. Computerprogramm, das ausführbare Anweisungen umfasst, die, wenn sie durch das Lokalisierungssystem (100) nach einem der Ansprüche 1 bis 11 ausgeführt werden, das Lokalisierungssystem (100) veranlassen, das Verfahren (200) nach Anspruch 12 oder 13 durchzuführen.

## Revendications

1. Système de localisation (100) comprenant :
un ou plusieurs nœuds de communication à bande ultra large (UWB) (102, 104, 106, 108) ;
un contrôleur (110) couplé fonctionnellement aux nœuds de communication UWB (102, 104, 106, 108) ;
dans lequel au moins un des nœuds de communication UWB (102, 104, 106, 108) est configuré pour effectuer une première opération de localisation, ladite première opération de localisation étant effectuée dans un mode de télémétrie ;
dans lequel au moins un des nœuds de communication UWB (102, 104, 106, 108) est configuré pour effectuer une seconde opération de localisation, ladite seconde opération de localisation étant effectuée dans un mode radar ;
dans lequel le contrôleur (110) est configuré pour réaliser une fonction prédéfinie sur une sortie de la première opération de localisation et une sortie de la seconde opération de localisation ;
**caractérisé en ce que** la sortie de la première opération de localisation est indicative d'une position d'un dispositif externe de communication UWB au sein d'un espace prédéfini, la sortie de la seconde opération de localisation étant indicative d'une position d'une personne dans ledit espace prédéfini, la fonction prédéfinie comprenant le calcul d'une distance entre ladite personne et ledit dispositif externe de communication UWB, et le contrôleur (110) étant en outre configuré pour générer des données servant à guider la personne jusqu'à la position du dispositif externe de communication UWB sur la base de ladite distance.

2. Système (100) selon la revendication 1, dans lequel la fonction prédéfinie comprend en outre la détermination d'une orientation de la personne vers le dispositif externe de communication UWB, et dans lequel le contrôleur (110) est en outre configuré pour générer des données servant à guider la personne jusqu'à la position du dispositif externe de communication UWB sur la base de ladite distance et de ladite orientation.

3. Système (100) selon l'une quelconque des revendications précédentes, comprenant en outre au moins un dispositif audio pour recevoir un signal audio, dans lequel le contrôleur (110) est configuré pour réaliser la fonction prédéfinie sur la sortie de la première opération de localisation, la sortie de la seconde opération de localisation et des données tirées dudit signal audio.

4. Système (100) selon la revendication 3, dans lequel lesdites données tirées du signal audio comprennent une consigne parlée qui comprend des informations servant à identifier un dispositif externe de communication UWB.

5. Système (100) selon la revendication 3 ou 4, dans lequel le contrôleur (110) est en outre configuré pour accepter, rejeter, filtrer, affiner ou post-traiter la sortie de la seconde opération de localisation sur la base d'une direction à partir de laquelle le signal audio est reçu, de l'intensité du signal audio et/ou d'autres propriétés du signal audio.

6. Système de localisation (100) comprenant :
un ou plusieurs nœuds de communication à bande ultra large (UWB) (102, 104, 106, 108) ;
un contrôleur (110) couplé fonctionnellement aux nœuds de communication UWB (102, 104, 106, 108) ;
dans lequel au moins un des nœuds de communication UWB (102, 104, 106, 108) est configuré pour effectuer une première opération de localisation, ladite première opération de localisation étant effectuée dans un mode de télémétrie ;
dans lequel au moins un des nœuds de communication UWB (102, 104, 106, 108) est configuré pour effectuer une seconde opération de localisation, ladite seconde opération de localisation étant effectuée dans un mode radar ;
dans lequel le contrôleur (110) est configuré pour réaliser une fonction prédéfinie sur une sortie de la première opération de localisation et une sortie de la seconde opération de localisation ;
**caractérisé en ce que** la sortie de la première opération de localisation est indicative de positions d'un ou de plusieurs dispositifs externes de communication UWB dans un espace prédéfini, la sortie de la seconde opération de localisation étant indicative de positions d'une ou de plusieurs personnes dans ledit espace prédéfini, et la fonction prédéfinie comprenant le fait de déterminer si les positions des dispositifs externes de communication UWB correspondent aux positions des personnes.

7. Système (100) selon la revendication 6, dans lequel le contrôleur (110) est en outre configuré pour générer une première alerte si au moins une des positions des personnes ne correspond à aucune des positions des dispositifs externes de communication UWB.

8. Système (100) selon la revendication 6 ou 7, dans lequel le contrôleur (110) est en outre configuré pour authentifier le dispositif externe de communication UWB.

9. Système (100) selon la revendication 8, dans lequel le contrôleur (110) est en outre configuré pour générer une deuxième alerte si le dispositif externe de communication UWB n'est pas authentique ou n'est pas autorisé à l'intérieur de l'espace prédéfini.

10. Système (100) selon les revendications 8 ou 9, l'authentification du dispositif externe de communication UWB comprenant une authentification via un transfert de données entre le contrôleur et le dispositif externe de communication UWB via un canal de communication UWB ou un autre canal de communication établi entre l'un des nœuds de communication UWB (102, 104, 106, 108) et ledit dispositif externe de communication UWB.

11. Système (100) selon l'une quelconque des revendications précédentes, dans lequel au moins un des nœuds de communication UWB (102, 104, 106, 108) est un nœud de communication UWB à double mode configuré pour effectuer à la fois la première opération de localisation et la seconde opération de localisation.

12. Procédé (200) de fonctionnement d'un système de localisation, le système comprenant un ou plusieurs nœuds de communication à bande ultra large, UWB, et un contrôleur, et le procédé comprenant :
la réalisation (202), par au moins un des nœuds de communication UWB, d'une première opération de localisation, ladite première opération de localisation étant effectuée dans un mode de télémétrie ;
la réalisation (204), par au moins un des nœuds de communication UWB, d'une seconde opération de localisation, ladite seconde opération de localisation étant effectuée dans un mode radar ;
la réalisation (206) par le contrôleur, d'une fonction prédéfinie sur une sortie de la première opération de localisation et une sortie de la seconde opération de localisation ;
**caractérisé en ce que** la sortie de la première opération de localisation est indicative d'une position d'un dispositif externe de communication UWB au sein d'un espace prédéfini, la sortie de la seconde opération de localisation étant indicative d'une position d'une personne dans ledit espace prédéfini, la fonction prédéfinie comprenant le calcul d'une distance entre ladite personne et ledit dispositif externe de communication UWB, et le contrôleur générant des données servant à guider la personne jusqu'à la position du dispositif externe de communication UWB sur la base de ladite distance.

13. Procédé (200) de fonctionnement d'un système de localisation, le système comprenant un ou plusieurs nœuds de communication à bande ultra large, UWB, et un contrôleur, et le procédé comprenant :
la réalisation (202), par au moins un des nœuds de communication UWB, d'une première opération de localisation, ladite première opération de localisation étant effectuée dans un mode de télémétrie ;
la réalisation (204), par au moins un des nœuds de communication UWB, d'une seconde opération de localisation, ladite seconde opération de localisation étant effectuée dans un mode radar ;
la réalisation (206) par le contrôleur, d'une fonction prédéfinie sur une sortie de la première opération de localisation et une sortie de la seconde opération de localisation ;
**caractérisé en ce que** la sortie de la première opération de localisation est indicative de positions d'un ou de plusieurs dispositifs externes de communication UWB dans un espace prédéfini, la sortie de la seconde opération de localisation étant indicative de positions d'une ou de plusieurs personnes dans ledit espace prédéfini, et la fonction prédéfinie comprenant le fait de déterminer si les positions des dispositifs externes de communication UWB correspondent aux positions des personnes.

14. Programme informatique comprenant des instructions exécutables qui, lorsqu'elles sont exécutées par le système de localisation (100) selon l'une quelconque des revendications 1 à 11, amènent ledit système de localisation (100) à exécuter le procédé (200) selon la revendication 12 ou 13.
